# EUROPÄISCHE PATENTSCHRIFT

(11) **EP 2 223 505 B1**
(45) Veröffentlichungstag und Bekanntmachung des Hinweises auf die Patenterteilung: **27.12.2017**
(21) Anmeldenummer: 08839320.2
(22) Anmeldetag: 14.10.2008
(51) Int. Cl.: H04W 4/02, G07B 15/02, G08G 1/14, H04M 17/00, G07F 17/24

(54) **VERFAHREN ZUM ABWICKELN EINES PARKVORGANGS MIT HILFE EINES MOBILFUNKGERÄTES**
METHOD FOR PERFORMING A PARKING PROCEDURE WITH THE HELP OF A MOBILE COMMUNICATION DEVICE
PROCÉDÉ D'EXÉCUTION D'UNE OPÉRATION DE STATIONNEMENT AU MOYEN D'UN APPAREIL DE TÉLÉPHONIE MOBILE

(30) Priorität: 17.10.2007 DE 102007050055
(43) Veröffentlichungstag der Anmeldung: 01.09.2010
(73) Patentinhaber: Deutsche Telekom AG, 53113 Bonn (DE)
(72) Erfinder: BAUSE, Thomas, 30453 Hannover (DE); KOMPART, Andreas, 53757 Sankt Augustin (DE)
(74) Vertreter: Blumbach Zinngrebe
(86) Internationale Anmeldenummer: PCT/EP2008/008681
(87) Internationale Veröffentlichungsnummer: WO 2009/049859

(56) Entgegenhaltungen:
- EP-A- 1 229 504
- WO-A-01/99053
- WO-A-97/19568
- WO-A-99/10844
- WO-A-2005/050575
- WO-A1-02/15130
- AU-A1- 2003 264 606
- DE-A1-102005 039 208
- US-B1- 6 618 593

## Beschreibung

Die Erfindung betrifft ein Verfahren zum Abwickeln eines Parkvorgangs unter Verwendung eines mit einem öffentlichen Mobilfunknetz verbundenen Mobilfunkgerätes.

Um Autofahrern das gebührenpflichtige Parken zu erleichtern, werden gegenwärtig Handypark-Systeme untersucht, bei denen zur Minuten-genauen Abrechnung von Parkgebühren Mobiltelefone zum Einsatz kommen.

Beispielsweise wird im Rahmen des EU-Projektes TELLUS ein Handypark-Verfahren getestet. Hierbei muss sich ein Autofahrer zu Beginn des Parkvorgangs über sein Mobiltelefon, auch Handy genannt, beim Betreiber des Handy-Parkens einwählen. Daraufhin teilt der Betreiber dem Autofahrer mit, in welchem Stadtbezirk er sich befindet und wie hoch der geltende Tarif zum Parken ist. Um den Parkvorgang zu beenden, muss der Autofahrer durch einen weiteren Anruf unter Verwendung einer zweiten Telefonnummer den Betreiber anrufen.

Die Australische Patentanmeldung AU 2003264606 A1 offenbart eine mobile kommerzielle Plattform, die eine Vielzahl von statischen Parksysteme einschließt. Ferner wird offenbart, eine Benutzeridentifikation an einen Server zu übermitteln, um Identität des Benutzers zu ermitteln. Parkplatzinformationen werden zum Standort des Servers übermittelt, um die Lage eines geparkten Fahrzeugs zu bestimmen. Dazugehörige Zahlungsinformationen werden an den Server übermittelt, um die Parkgebühren zu zahlen. Der Server empfängt die übermittelten Informationen, verbindet die Parkplatzlage und Zahlungsinformationen mit der Benutzeridentifikation. Die einander zugeordneten Datensätze werden aufgezeichnet und das Konto des Benutzers wird mit der Parkgebühr belastet.

Die Internationale Patentanmeldung WO 97/19568 A1 offenbart ein drahtloses mobile Parksystem und Verfahren zur SMS-Kommunikation zwischen der Mobilstation und der Parkplatz-Datenbank. Das Parksystem stellt einen Parkplatzanforderung bereit, die als SMS in der Mobilstation gespeichert ist, oder eine SIM-Karte bereit, die eine Parkplatz-Kurzmitteilung erzeugt, wenn sie von demjenigen Benutzer der Mobilstation, der einen Parkplatz besetzen will, ausgewählt und aktiviert wird. Die Parklatz-Kurzmitteilung kann auf dem Display der Mobilstation aktiviert und angezeigt werden, indem sie den Parkbefehl aus dem Optionsmenü der Mobilstation auswählt. Sie wird dann zu der Parkplatz-Datenbank gesendet. Die Parkplatz-Datenbank registriert die Ankunftszeit des Fahrzeugs und sendet ein Parkplatz-Kurzmitteilung zurück an die Mobilstation als eine Bestätigung der Registrierung der Ankunftszeit des Benutzers auf dem Parkplatz. Für die Abfahrtszeit der Mobilstation wird eine ähnlicher Datentransfer zwischen Mobilstation und der Parkplatz-Datenbank durchgeführt.

Die Internationale Patentanmeldung WO01/99053 A2 offenbart ein Verfahren zum Verwalten von Parkgebühren. An dem Verfahren beteiligt sind mindestens ein Parkplatz mit einem eindeutigen Code bezeichnet, mindestens ein mobiles Kommunikationsgerät, mindestens eine mobile Netzbetreiber-Datenbank und mindestens mobiles Kommunikationsgerät eines Parkplatzinspektors. Es wird zusätzlich die Datenbank des Parkplatzbetreibers erstellt, in der eine Vorauszahlungskonto für den Kunden bereitgestellt ist, an das Gelder für die Zahlung der Parkplatz-Dienstleistungen überwiesen werden.

Die Europäische Patentanmeldung EP 1'229 504 offenbart ein Parkplatzgebührensystem mit einem Computer Anordnung mit einem Prozessor verbunden mit einem Speicher, worin eine erste Datenbank abgelegt ist. Die erste Datenbank umfasst Parkplatzinformationen bezogen auf eine Parkplatzstartzeit zumindest eines Fahrzeugs und Standortinformationen des Fahrzeugs. Ein Prozessor ist dazu vorgesehen, aus den Parkplatzinformationen und den Standortinformationen eine Parkgebühr zu berechnen,

Die Computer Anordnung ist ebenfalls dazu vorgesehen, Fahrzeuginformationen betreffend allgemeine Parkerlaubnisse für eine oder mehrere vorbestimmte Parkzonen in einer zweiten Datenbank abzuspeichern, damit ein Aufpasser anhand der Computer-Anordnung überprüfen kann, ob ein Fahrzeug der angegebenen Parkzone parken darf.

Die Deutsche Patentanmeldung DE 10 2005 039 208 A1 betrifft einen virtuellen Parkschein. Mit Hilfe eines Rechners bzw. Servers wird eine Position zugeordnet, nämlich der Ort, an dem das Fahrzeug geparkt ist. Bei einer Kontrolle auf gültige Parkscheine wird über den Server geprüft, ob an dem Ort, an dem ein Fahrzeug geparkt ist, auch ein virtueller Parkschein abgelegt ist. Im Vergleich zum bekannten "m-parking" braucht vom Kontrolleur nicht bei jedem Fahrzeug ohne Parkschein aus Papier durch Eintippen des Kennzeichens beim Server abgefragt werden, ob für dieses Fahrzeug ein gültiger virtueller Parkschein existiert und beim Erstellen des virtuellen Parkscheins braucht keine SMS mehr an eine Servicenummer geschickt werden, sondern lediglich in einer entsprechenden Parkschein-Applikation eines Endgeräts die gewünschte Parkdauer eingetragen bzw. ausgewählt werden. Zusätzlich kann der Fahrer optimal, bspw. in einer fremden Stadt, von seinem Endgerät auf Grund der zugeordneten Positionsangabe wieder zu seinem geparkten Fahrzeug geführt werden.

Aus der WO 02/15130 A1 ist ein zellulares Mobilfunk-System mit mobilen WAP (Wireless Application Protocol) Endgeräten bekannt. Auf Basis von Positionsdaten, einer IMSI (International Mobile Subscription Identity) und einer Registrierung eines Endgeräts überträgt ein WAP Gateway einem WAP-Endgerät Park-Informationen betreffend Park-Bereiche in einer Umgebung des WAP-Endgeräts und dazugehörende Kosten.

Aus der US 6,618,593 B1 ist ein Positionsgeber leerer Parkplätze bekannt. Ein, in einem von seiner Parkposition abfahrenden Fahrzeug angeordnetes, Mobilfunkgerät sendet eine Nachricht umfassend die Position des hinterlassenen leeren Parkplatzes an einen zentralen Server. Ein Mobilfunkgerät in einem weiteren Fahrzeugs auf dem Parkplatz, dessen Fahrer nach einem freien Parkplatz sucht, wird über den leeren Parkplatz und seine Position durch den zentralen Server benachrichtigt.

Der Erfindung liegt die Aufgabe zugrunde, ein Verfahren zum Abwickeln eines Parkvorgangs unter Verwendung eines Mobilfunkgerätes bereitzustellen, welches die Nutzung des sogenannten HandyparkDienstes für einen Kunden einfacher, bequemer und sicherer macht.

Ein Kerngedanke der Erfindung ist darin zu sehen, dass der Standort eines Autofahrers, welcher im Besitz eines

Mobilfunkgerätes ist, ermittelt wird, um prüfen zu können, ob sich der Autofahrer in einer Parkzone befindet, innerhalb der er parken darf. Die Feststellung, ob sich der Autofahrer innerhalb einer zulässigen Parkzone befindet, erfolgt anhand von GSM-Koordinaten oder einer Mobilfunk-Netzzellen-Kennung, welche den aktuellen Standort des Autofahrers definieren. Bekannt ist es, den Versorgungsbereich eines Mobilfunknetzes in Netzzellen zu unterteilen und jeder Netzzelle eine Kennung oder Identifizierung (ID) zuzuordnen, die die geografische Lage der jeweiligen Netzzelle definiert.

Das oben genannte technische Problem wird durch ein Verfahren gemäß Anspruch 1 zum Abwickeln eines Parkvorgangs unter Verwendung eines mit einem öffentlichen Mobilfunknetz verbundenen Mobilfunkgerätes gelöst.

Danach werden ortsbezogene Daten ermittelt, die den Standort bestimmten, an dem sich das Mobilfunkgerät eines Benutzers aktuell befindet und an dem das Fahrzeug des Benutzers geparkt werden soll. Die ortsbezogenen Daten sowie eine individuelle Kennung, die in dem Mobilfunkgerät gespeichert ist, werden zu einer zentralen Verwaltungs- und Überwachungseinrichtung, nachfolgend auch Rechenzentrum genannt, übertragen. Bei der individuellen Kennung handelt es sich vorzugsweise um die Rufnummer des Mobilfunkgerätes. In der zentralen Verwaltungs- und Überwachungseinrichtung werden die ortsbezogenen Daten in eine vordefinierte Parkzone umgesetzt. Unter Ansprechen auf die individuelle Kennung wird geprüft, ob der Benutzer des Mobilfunkgerätes berechtigt ist, ein Fahrzeug innerhalb der ermittelten Parkzone zu parken. Diese Prüfung enthält vorteilhafter Weise die Schritte zum Ermitteln, ob der Benutzer überhaupt zur Anwendung des Verfahrens, d. h. mobilen Parkdienstes, berechtigt ist und, wenn ja, ob er sich innerhalb des von dem mobilen Parkdienst abgedeckten Gebiets befindet.

Ist der Parkzone wenigstens ein Parkplatz zugeordnet, so kann gemäß einer vorteilhaften Weiterbildung unter Ansprechen auf die Parkzone nunmehr geprüft, ob ein freier Parkplatz verfügbar ist, sofern der Benutzer berechtigt ist, die Parkzone zu benutzen. Angemerkt sei an dieser Stelle, dass eine Parkzone nicht in mehrere Parkplätze unterteilt sein muss, sondern auch nur einen einzigen Parkplatz enthalten kann.

Angemerkt sei an dieser Stelle, dass vorzugsweise in der zentralen Verwaltungs- und Überwachungseinrichtung digitale Straßenkarten gespeichert sind, die Straßen- oder Straßenabschnitte aufweisen, welche vordefinierte Parkzonen enthalten. Vorzugsweise sind den definierten Parkzonen Parkzonen-Kennungen zugeordnet, die die Verwaltung und Überwachung von parkenden Fahrzeugen erleichtern. Weiterhin sind in bevorzugter Weise den Straßen- oder Straßenabschnitten, welche auch die Parkzonen enthalten, GSM-Koordinaten und Mobilfunk-Netzzellen-Kennungen zugeordnet. Um anhand des lokalisierten Standortes des Mobilfunkgerätes und somit des zu parkenden Fahrzeuges die dem Standort zugeordnete Parkzone ermittelt zu können, werden die ermittelten ortsbezogenen Daten durch GSM-Koordinaten oder eine Mobilfunk-Netzzellen-Kennung dargestellt. Die GSM-Koordinaten oder Mobilfunk-Netzzellen-Kennungen werden vom Mobilfunkgerät oder vom Mobilfunknetz, beispielsweise von einer Empfangseinrichtung des Netzbetreibers, ermittelt.

Um dem Benutzer eine einfache, bequeme und sichere Durchführung des Parkvorgangs zu ermöglichen, wird das KFZ-Kennzeichen des Benutzerfahrzeuges, die individuelle Kennung, die ortsbezogenen Daten und gegebenenfalls ein Hinweis auf einen Parkwunsch des Benutzers in einer SMS-Mitteilung über ein dem Mobilfunknetz zugeordnetes SMS-Gateway zur zentralen Verwaltungs- und Überwachungseinrichtung übertragen.

Damit der Benutzer den Parkvorgang lediglich durch einen einzigen Tastendruck auf seinem Mobilfunkgerät auslösen kann, werden das Kfz-Kennzeichen des Benutzerfahrzeuges, die individuelle Kennung und die Rufnummer des SMS-Gateways im Mobilfunkgerät, insbesondere auf einer SIM-Karte des Mobilfunkgerätes gespeichert. Beim Betätigen einer vordefinierten Taste wird die SMS-Mitteilung, die das Kfz-Kennzeichen des Benutzerfahrzeuges, die individuelle Kennung und gegebenenfalls ein Hinweis auf einen Parkwunsch des Benutzers erzeugt und zum SMS-Gateway übertragen.

Werden die ortsbezogenen Daten vom Mobilfunkgerät selbst ermittelt, so werden auch diese Daten in der SMS-Mitteilung vom Mobilfunkgerät zum SMS-Gateway übertragen. Werden hingegen die ortsbezogenen vom Mobilfunknetz ermittelt, so werden diese Daten an einer geeigneten Stelle innerhalb des Mobilfunknetzes in die SMS-Mitteilung eingebettet und dann zum SMS-Gateway weitergeleitet.

Unter Ansprechen auf den Empfang der SMS-Mitteilung erzeugt die zentrale Verwaltungs- und Überwachungseinrichtung einen Zeitstempel, der den Parkbeginn anzeigt. Weiterhin kann die zentrale Verwaltungs- und Überwachungseinrichtung anhand eines gespeicherten Datensatzes prüfen, ob innerhalb der Parkzone ein freier Parkplatz verfügbar ist. Wenn ja, werden das Kfz-Kennzeichen, der Parkbeginn und die Parkzone in einer Datenbank gespeichert. Anstelle der Parkzone kann auch eine der Parkzone zugeordnete Parkzonen-Kennung gespeichert werden.

Mit dem zuvor beschriebenen Verfahren ist ein Autofahrer in der Lage, durch Betätigen einer einzigen Taste sein Fahrzeug in einen Parkbestand einzubuchen. Die Überprüfung, ob der Autofahrer den mobilen Parkdienst benutzen darf, sich innerhalb einer berechtigten Parkzone befindet und freie Parkplätze innerhalb der berechtigten Parkzone verfügbar sind, erfolgt ohne sein Mitwirken.

Um den Parkvorgang beenden zu können, wird ein Hinweis auf das Parkende sowie die individuelle Kennung vom Mobilfunkgerät zur zentralen Verwaltungs- und Überwachungseinrichtung übertragen. Diese Informationen werden vorteilhafter Weise beim Betätigen einer einzigen Taste des Mobilfunkgerätes in eine SMS-Meldung eingebettet und übertragen. In der zentralen Verwaltungs- und Überwachungseinrichtung wird ein Zeitstempel erzeugt, der das Parkende anzeigt. Unter Ansprechen auf den Parkbeginn und das Parkende kann die Parkdauer berechnet werden.

Damit ist sichergestellt, dass ein parkenden Fahrzeuges aus einem Parkbestand ebenfalls nur durch einen einzigen Tastendruck auf dem Mobilfunkgerät ausgebucht werden kann.

Dank des geschilderten Verfahrens wird die Mitwirkung des Autofahrers beim Ein- und Ausbuchen eines zu parkenden Fahrzeuges auf ein Minimum reduziert, wodurch ein falsches Ein- oder Ausbuchungen durch Fehleingaben deutlich reduziert werden. Insbesondere braucht der Autofahrer keine Ortskenntnisse zu besitzen, um die Parkzone identifizieren zu können.

Unter Ansprechen auf die Parkdauer und die Parkzone kann die zentrale Verwaltungs- und Überwachungseinrichtung die zu bezahlende Parkgebühr ermitteln.

Verfügt der Benutzer des Mobilfunkgerätes über ein Prepaid-Konto, so kann die zentrale Verwaltungs- und Überwachungseinrichtung den Benutzer in Abhängigkeit des Kontostandes, des Parkbeginns und der Parkgebühr der jeweiligen Parkzone eine Meldung über die maximale Parkdauer am Mobilfunkgerät informieren.

Darüber hinaus kann das Pre-paid-Konto automatisch in Höhe der Parkgebühr belastet werden.

Um ein Fahrzeug nach Beendigung des Parkvorganges aus dem Parkbestand ausbuchen zu können, kann das Kfz-Kennzeichen aus der Datenbank wieder gelöscht werden.

Die Erfindung wird nachfolgend anhand eines Ausführungsbeispiels in Verbindung mit den beiliegenden Zeichnungen näher erläutert. Es zeigen:
- Fig. 1: ein Kommunikationssystem basierend auf einem Mobilfunknetzwerk, welches das erfindungsgemäße Handy-Parken unterstützt,
- Fig. 2: ein Flussdiagramm zur Darstellung des Einbuchens eines Fahrzeugs zu Beginn eines Parkvorgangs,
- Fig. 3: ein Flussdiagramm zur Darstellung einer Statusabfrage des Parkzustands, und
- Fig. 4: ein Flussdiagramm zur Darstellung des Ausbuchens eines Fahrzeugs am Ende eines Parkvorgangs.

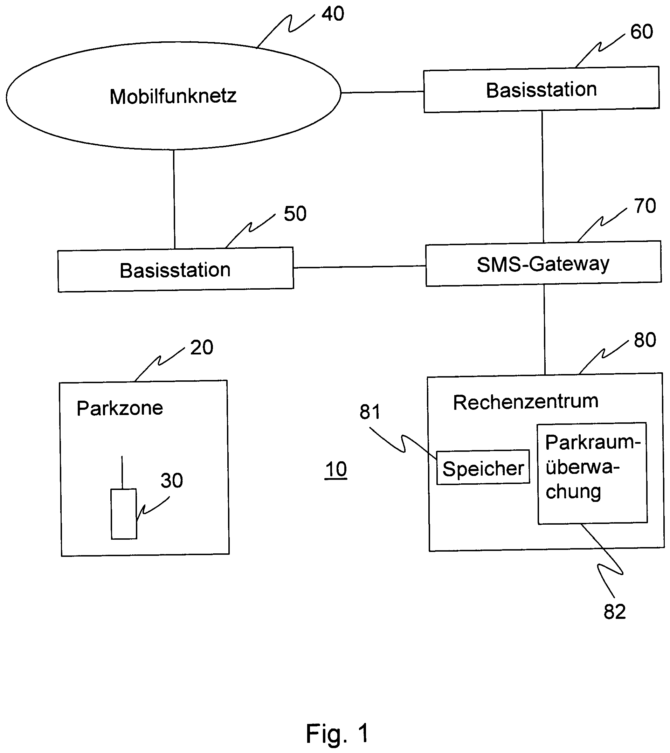

Fig. 1 zeigt schematisch ein Kommunikationssystem 10, welches ein öffentliches Mobilfunknetz 40 aufweist. Lediglich der einfachen Darstellung wegen sind nur zwei Basisstationen 50 und 60 mit dem Mobilfunknetz 40 verbunden Ebenfalls der einfachen Darstellung wegen ist nur eine Parkzone 20 dargestellt, innerhalb derer ein Autofahrer sein Fahrzeug parken kann. Angenommen sei, dass die Parkzone 20 in mehrere Parkplätze unterteilt ist. Das zu parkende Fahrzeug ist symbolisch durch ein Mobilfunkgerät, beispielsweise ein Handy 30 dargestellt. Die Basisstationen 50 und 60 sind mit einem SMS-Gateway 70 eines Handyparken-Betreibers verbunden, welches zum Empfangen vom Handy 30 beziehungsweise zum Handy 30 ausgebildet ist. Das SMS-Gateway 70 kann unter einer fest zugeordneten Dienste-SMS-Rufnummer eines Handyparken-Dienstanbieters erreicht werden. Die Rufnummer des SMS-Gateways und das KFZ-Kennzeichen des Fahrzeugs des Handy-Nutzers sind auf einer SIM-Karte im Handy 30 abgelegt und müssen nicht extra eingegeben werden. Allerdings kann, wie nachfolgend noch erläutert wird, das gespeicherte Kfz-Kennzeichen auch geändert werden.

Das SMS-Gateway 70 ist mit einem Rechenzentrum 80, nachfolgend auch zentrale Verwaltungs- und Überwachungseinrichtung genannt, verbunden. Das Rechenzentrum weist wenigstens eine Speichereinrichtung 81 auf, in dem beispielsweise relevante Daten eingebuchter Fahrzeuge, Parkzonentarife und dergleichen abgelegt sein können. Ferner ist eine Parkraum-Überwachungseinrichtung 82 vorgesehen, die die zur Verfügung stehenden Parkzonen überwacht und gegebenenfalls Fakturierungs- und Parkbelegdaten bereitstellt. Die Berechnung der Parkdauer und das Abwickeln der Parkgebührenbezahlung kann ebenfalls über die Parkraum-Überwachungseinrichtung 82 erfolgen.

Nachfolgend wird die Funktionsweise des Handy-Parken-Systems näher erläutert.
Bevor ein Autofahrer den Handy-Parken-Service benutzen kann, meldet er sich beispielsweise über das Internet bei einem Handy-Parken-Service an. Bei der Anmeldung gibt der Nutzer die Rufnummer seines Handys 30, das Kfz-Kennzeichen seines Kraftfahrzeugs, welches er üblicherweise nutzt, und gegebenenfalls Angaben zur Bezahlung der Parkentgelte (Prepaid-Konto, Girokonto, Kreditkarten-Nummmer und dergleichen) an einem Personalcomputer oder an seinem Handy 30 ein. Nachdem sich der Nutzer erfolgreich angemeldet hat, werden die Handy-Rufnummer und das Kfz-Kennzeichen beispielsweise im Speicher 81 für spätere Prüfzwecke gespeichert.

In Abhängigkeit von der Bezahlart kann der Nutzer sein Handy-Parken-Konto anonymisiert oder personalisiert führen. Im vorliegenden Beispiel sei angenommen, dass der Handy-Parken-Dienst eine bundesweite Nutzung ermöglicht.

Nach einer erfolgreichen Registrierung erhält der Nutzer ein Applet zur Nutzung des Handy-Parken-Dienstes, welches beispielsweise von seinem Mobilfunk-Anbieter auf sein Handy 30 übertragen wird (over-the-air-Übertragung). Das Applet installiert sich automatisch auf der SIM-Karte des Handys 30. Das Applet beinhaltet bereits das Kfz-Kennzeichen, das der Nutzer bei der Registrierung eingegeben hat, sowie die Rufnummer des Dienste-SMS-Gateways 70, welches für Parkbuchungsvorgänge verwendet wird. Demzufolge werden bei der Installation des Applets auch das Kfz-Kennzeichen sowie die Rufnummer des SMS-Gateways 70 auf der SIM-Karte des Handys 30 gespeichert.

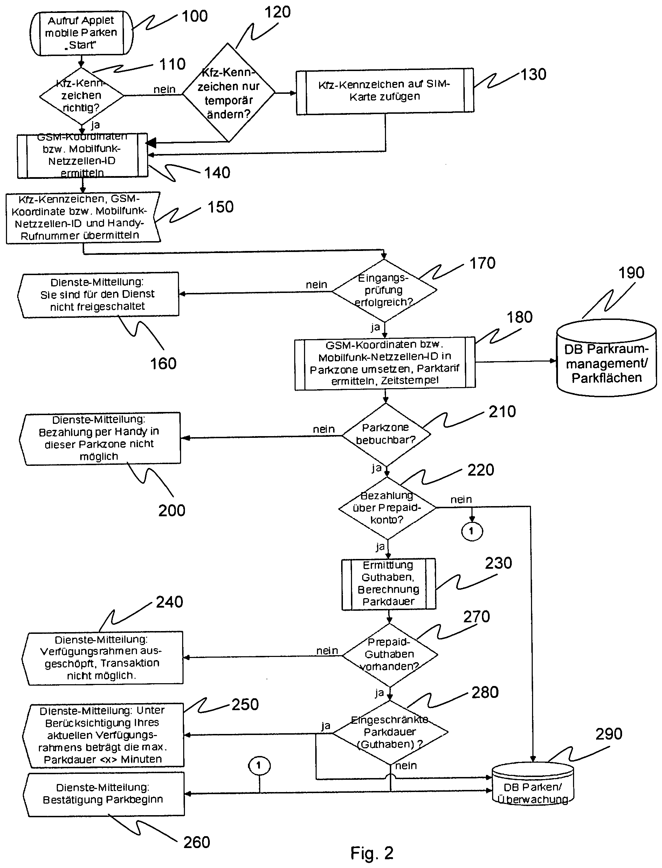

Angenommen sei nunmehr, dass der Nutzer des Handys 30 sein Kraftfahrzeug innerhalb der Parkzone 20 parken möchte. Der genaue Ablauf des Einbuchens eines Fahrzeugs wird nunmehr anhand der Fig. 2 erläutert.
Der Nutzer ruft zunächst das auf der SIM-Karte des Handys 30 gespeicherte Applet zum Starten des Parkvorgangs auf, wie in Block 100 dargestellt ist. Nach dem Aufruf wird das in der SIM-Karte hinterlegte Kfz-Kennzeichen auf dem Handy 30 eingeblendet. Der Nutzer kann nunmehr im Entscheidungsblock 110 bestätigen, dass das in der SIM-Karte hinterlegte Kfz-Kennzeichen dem Fahrzeug zugeordnet ist, welches er gerade fährt. Wenn das Kennzeichen korrekt ist, wird Block 140 ausgeführt. Wenn das Kfz-Kennzeichen nicht richtig ist, erhält der Nutzer nunmehr in Block 120 die Möglichkeit, das Kfz-Kennzeichen vorübergehend einfach per Tastendruck zu ändern. In diesem Fall wird das neue Kennzeichen auf dem Handy 30 temporär gespeichert. Alternativ kann der Nutzer in Block 130 auch das auf der SIM-Karte gespeicherte Kfz-Kennzeichen dauerhaft ändern. Sobald das richtige Kfz-Kennzeichen auf dem Handy 30 angezeigt wird, ermittelt das Handy 30 gemäß einer bevorzugten Ausführungsform in Block 140 die GSM-Koordinaten oder die Mobilfunk-Netzzellen-Kennung des Mobilfunknetzes 40, welche den aktuellen Standort des Mobilfunkgerätes 30 definiert. Durch einen einfachen Tastendruck bewirkt der Nutzer in Block 150, dass das Handy eine SMS-Meldung, die das Kfz-Kennzeichen, einen Hinweis auf einen Parkbeginn, die Rufnummer des Handys 30, die GSM-Koordinaten oder die Mobilfunk-Netzzellen-Kennung enthält, erzeugt und automatisch unter Verwendung der in der SIM-Karte hinterlegten Dienste-/SMS-Nummer über das Mobilfunknetz 40 und das SMS-Gateway 70 zum Rechenzentrum 80 sendet. Werden die GSM-Koordinaten oder die Mobilfunk-Netzzellen-Kennung nicht vom Handy 30 ermittelt, so werden diese Daten vom Mobilfunknetz 40 selbst bereitgestellt und der SMS-Mitteilung an geeigneter Stelle zugefügt.

In Block 170 führt das Rechenzentrum 80 unter Ansprechen auf die empfangene SMS-Mitteilung eine Eingangsprüfung durch. Bei der Eingangsprüfung wird beispielsweise ermittelt, ob der Nutzer des Handys 30 überhaupt für den Handyparken-Dienst freigeschaltet ist. Hierzu wird geprüft, ob die in der SMS-Nachricht empfangene Handy-Rufnummer und gegebenenfalls das Kfz-Kennzeichen im Speicher 81 enthalten sind. Liegt die entsprechende Handy-Nummer nicht im Speicher 81 vor, d. h. der Nutzer ist nicht freigeschaltet worden, wird in Block 1860 eine entsprechende SMS-Nachricht vom Rechenzentrum 80 über das SMS-Gateway 70 und das Mobilfunknetz 40 zum Handy 30 übertragen. Erkennt jedoch das Rechenzentrum 40, dass der Nutzer des Handys 30 für das Handy-Parken registriert worden ist, wird in Block 180 ein Zeitstempel, der auf den Parkbeginn hinweist, erzeugt. Ferner wird aus den in der SMS-Nachricht empfangenen GSM-Koordinaten oder Mobilfunk-Netzzellen-Kennung die Parkzone 20 ermittelt, innerhalb derer der Nutzer des Handys 30 sein Fahrzeug parken möchte. Um die empfangenen GSM-Koordinaten oder die Mobilfunk-Netzzellen-Kennung in die Parkzone 20 umsetzen zu können, ist gemäß einem Ausführungsbeispiel eine elektronische Straßenkarte in einer Datenbank 190 abgelegt. Die elektronische Karte enthält im vorliegenden Beispiel alle Straßen- oder Straßenabschnitte, vordefinierte gebührenpflichtige Parkzonen innerhalb Deutschlands und den Parktarif jeder Parkzone. Weiterhin kann in der Datenbank 190 eine Nachschlagetabelle hinterlegt sein, in der jeder definierten Parkzone entsprechende GSM-Koordinaten oder die entsprechende Mobilfunk-Netzzellen-Kennung zugeordnet ist. Ferner kann jeder Parkzone auch eine eindeutige Parkzonen-Kennung zugeordnet sein. Unter Ansprechen auf die in der SMS-Meldung empfangenen GSM-Koordinaten oder Mobilfunk-Netzzellen-Kennung kann das Rechenzentrum 80 die dazugehörende, in der Datenbank 190 hinterlegte Parkzone finden. In Block 210 prüft das Rechenzentrum 80 weiter, ob die Parkzone 20 bebuchbar ist. Diese Prüfung erfolgt beispielsweise anhand der in der Datenbank 190 gespeicherten Daten. Sofern eine Parkzone in mehrere Parkplätze unterteilt ist, enthält die Datenbank 190 auch Informationen darüber, wie viele Parkplätze belegt oder noch frei sind. Sofern die in der SMS-Meldung enthaltenen GSM-Koordinaten oder die entsprechende Mobilfunk-Netzzellen-Kennung eine gespeicherte Parkzone identifizieren, prüft das Rechenzentrum beispielsweise anhand der in der SMS-Nachricht enthaltenen Handy-Rufnummer und/oder KfZ-Kennzeichen, ob der Nutzer die Parkzone 20 buchen darf. Wenn ja, wird weiter geprüft, ob die Parkzone im Augenblick überhaupt bebuchbar ist, d. h. zum Beispiel die Parkplätze nicht für Sonderzwecke, z. B. Wochenmarkt, gesperrt sind. Ist die Parkzone nicht bebuchbar, so wird gemäß Entscheidungsblock 210 im Rechenzentrum 80 eine SMS-Meldung erzeugt, die zum Handy 30 übertragen wird. Die SMS-Meldung weist den Nutzer des Handys 30 darauf hin, dass die Parkzone 20, innerhalb der er sich momentan aufhält, zumindest im Augenblick nicht bebuchbar ist.

Wenn die Parkzone 20 bebuchbar ist, wird der Nutzer des Handys 30 unter Angabe des Kfz-Kennzeichens, des Zeitstempels, der den Parkbeginn signalisiert und die Parkzone 20 oder deren Parkzonen-Kennung in das Rechenzentrum eingebucht. Diese Daten können in der Datenbank 190 oder einem separaten Speicher abgelegt werden.

Wird im Entscheidungsblock 210 festgestellt, dass die Parkzone 20 durch den Nutzer bebuchbar ist, wird im Entscheidungsblock 220 geprüft, ob der Nutzer bei seiner Registrierung angegeben hat, dass die Bezahlung über ein Pre-paid-Konto erfolgen soll. Wurde keine Pre-paid-Konto-Bezahlung vereinbart, führt die Parkraum-Überwachungseinrichtung 82 ein anderes Abrechnungsverfahren durch. Die dazu erforderlichen Daten können in einer Datenbank 290 abgelegt werden. Die Durchführung solcher Abrechnungsverfahren ist jedoch nicht Gegenstand der Erfindung.

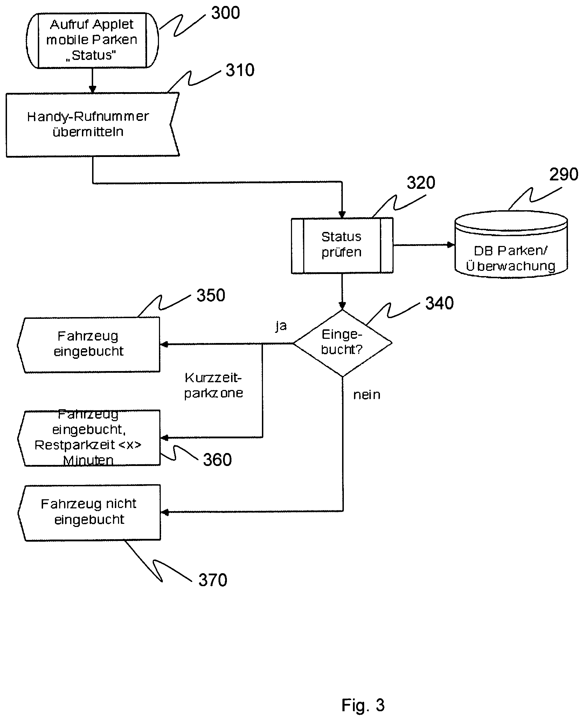

Für den Fall, dass Entscheidungsblock 200 feststellt, dass der Nutzer über ein Pre-paid-Konto verfügt, ermittelt das Rechenzentrum 80 in Block 230 das zur Verfügung stehende Guthaben. In Abhängigkeit des ermittelten Guthabens, der Parkzone 20 und des im Rechenzentrum 80 hinterlegten Parktarifs für die Parkzone 20 kann in Block 230 auch die maximale Parkdauer berechnet werden. Weiterhin kann in einem Entscheidungsblock 270 geprüft werden, ob auf dem Pre-paid-Konto des Nutzers noch ein Guthaben vorhanden ist. Wenn nicht, wird eine SMS-Mitteilung vom Rechenzentrum 90 zum Handy 30 übertragen, in der dem Nutzer in Block 240 mitgeteilt wird, dass der Verfügungsrahmen ausgeschöpft ist, und somit die Parkgebühren nicht mehr bezahlt werden können. Wenn jedoch noch ein Guthaben auf dem Pre-paid-Konto vorhanden ist, verzweigt der Entscheidungsblock 270 zu einem Entscheidungsblock 280. Im Entscheidungsblock 280 kann geprüft werden, ob das Guthaben eine Parkdauer gewährt, die oberhalb oder unterhalb eines Schwellenwertes liegt. Liegt das Guthaben unterhalb eines Schwellenwerts, so wird mittels einer SMS-Meldung, welche im Rechenzentrum 80 erzeugt wird, dem Nutzer des Handys 30 signalisiert, dass das verfügbare Guthaben nur eine eingeschränkte Parkdauer gewährt. Die maximal verfügbare Parkdauer wird dann im Handy 30 angezeigt, wie durch Block 250 signalisiert ist, und gegebenenfalls in der Datenbank 290 zusammen mit der Handy-Rufnummer und/oder dem Kfz-Kennzeichen gespeichert. Ist jedoch ein ausreichendes Guthaben auf dem Pre-paid-Konto vorhanden, so kann diese Information ebenfalls in der Datenbank 290 abgelegt werden. Darüber hinaus wird eine SMS-Meldung vom Rechenzentrum 80 erzeugt und zum Handy 30 übertragen welche, wie in Block 260 dargestellt, dem Handy-Nutzer den Parkbeginn bestätigt. Nunmehr wird auf Fig. 3 Bezug genommen, um den Ablauf einer Abfrage des Parkstatus zu erläutern.

Der Nutzer kann auf seinem Handy 30 wiederum das Applet "Handy-Parken" aufrufen, um den Parken-Status zu erfragen, wie dies in Block 300 dargestellt ist. In Schritt 310 überträgt das Handy 30 eine SMS-Meldung, in der das auf der SIM-Karte gespeicherte Kfz-Kennzeichen, die gespeicherte Handy-Rufnummer und ein Hinweis zur Ermittlung des Parken-Status enthalten sind. Die SMS-Meldung wird über das SMS-Gateway 70 zum Rechenzentrum 80 übertragen. Unter Ansprechen auf die empfangene SMS-Nachricht führt die Parkraum-Überwachungseinrichtung 82 in Block 320 eine Statusprüfung durch. Hierzu fragt die Parkraum-Überwachungseinrichtung 82 die Datenbank 290 ab. Bei der Statusprüfung wird im Entscheidungsblock 340 geprüft, ob das Fahrzeug mit dem in der SMS-Meldung enthaltenen Kfz-Kennzeichen eingebucht, mit eingeschränkter Parkdauer oder Restparkzeit eingebucht oder nicht eingebucht ist. Der entsprechende Parken-Zustand wird von dem Rechenzentrum in einer SMS-Mitteilung zum Handy 30 übertragen, wie dies durch die Blöcke 350, 360 bzw. 370 dargestellt ist.

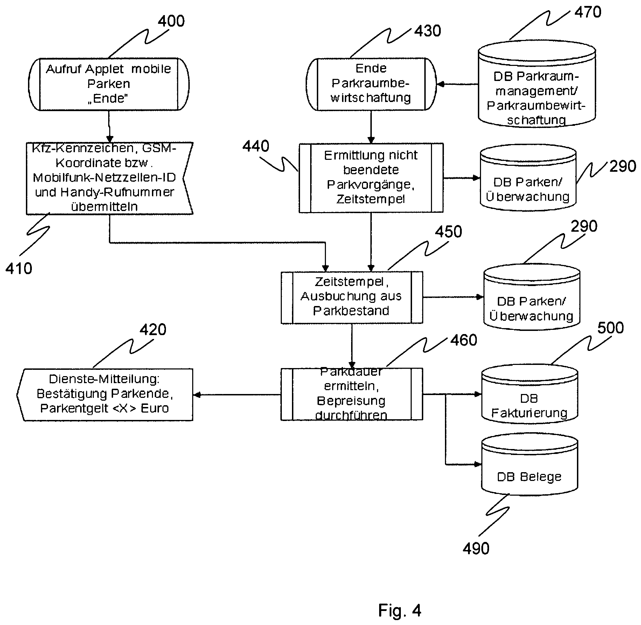

Nunmehr wird Fig. 4 betrachtet, um den Ablauf bei Beendigung eines Parkvorgangs zu erläutern.

Beendet der Parkzonennutzer den Parkvorgang, so ruft er an seinem Handy 30 wiederum das Applet "Handy-Parken" auf, wie in Block 400 dargestellt. Durch Betätigung einer einzigen Taste erzeugt das Handy 30 eine SMS-Nachricht, welche einen Hinweis auf das Parkende, die Handy-Rufnummer, das Kfz-Kennzeichen und/oder die GSM-Koordinaten oder die Mobilfunk-Netzzellen-Kennung enthalten kann. Die SMS-Nachricht wird dann unter Verwendung der in der SIM-Karte hinterlegten Dienste-/SMS-Rufnummer über das SMS-Gateway 70 zum Rechenzentrum 80 übertragen. Dieser Vorgang ist in Block 410 dargestellt. Unter Ansprechen auf den Empfang der SMS-Nachricht erzeugt das Rechenzentrum 80 einen Zeitstempel, welcher das Parkende signalisiert, wie in Block 450 dargestellt. Der Zeitstempel kann zusammen mit dem Kfz-Kennzeichen, der Handy-Rufnummer und/oder den GSM-Koordinaten oder der Mobilfunk-Netzzellen-Kennung in der Datenbank 290 oder der Datenbank 190 gespeichert werden. Gleichzeitig oder zu einem späteren Zeitpunkt erfolgt das Ausbuchen des Fahrzeugs aus dem Parkbestand, indem beispielsweise das Kfz-Kennzeichen aus der Datenbank 290 oder 190 gelöscht wird. Obwohl das Fahrzeug aus der Datenbank 190 oder 290 ausgebucht worden ist, bleibt es vorzugsweise temporär für die Parkraumüberwachung 82 noch sichtbar.

Unter Ansprechen auf den im Rechenzentrum 80 gespeicherten Parkbeginn und das ermittelte Parkende wird die Parkdauer für die Handy-Nummer ermittelt, wie in Block 460 dargestellt. Aus dem der Parkzone 20 zugeordneten Parktarif, der ebenfalls im Rechenzentrum hinterlegt ist, kann zudem die zu bezahlende Parkgebühr berechnet werden. Sofern der Nutzer bei der Registrierung ein Pre-paid-Konto angegeben hat, kann die Abbuchung der Parkgebühren sofort in Block 460 erfolgen. Das Parkende und die Höhe des Parkentgeltes wird vom Rechenzentrum 80 in einer SMS-Meldung über das SMS-Gateway 70 zum Handy 30 übertragen. Die entsprechende Dienste-Mitteilung ist in Block 420 symbolisch dargestellt.

Im Block 460 können entsprechende Fakturierungs- und Parkbelegdaten bereitgestellt werden, die in einer Datenbank 500 beziehungsweise 490 abgelegt werden. Den Parkbeleg kann der Nutzer beispielsweise über einen speziellen Account im Internet beziehen und selbst ausdrucken.

In der Praxis beginnt und endet die tägliche Parkraumbewirtschaftung zu bestimmten Zeitpunkten, die in einer Datenbank 470 gespeichert werden. Das tägliche Ende einer Parkraumbewirtschaftung ermittelt das Rechenzentrum 80 aus den in der Datenbank 470 gespeicherten Daten.

In Zusammenarbeit mit dem Parkraumanbieter kann jeweils geklärt werden, ob noch eingebuchte Parkzonennutzer mit Ende der Parkraumbewirtschaftungszeit automatisch ausgebucht werden. Aus den in der Datenbank 190 oder 290 gespeicherten Kfz-Kennzeichen und/oder Handy-Nummern, kann das Rechenzentrum die Fahrzeuge ermitteln, die nach dem Ende der Parkraumbewirtschaftung noch nicht ausgebucht wurden. Zudem kann aus den zusätzlich gespeicherten GSM-Koordinaten oder Mobilfunk-Netzzellen-Kennungen ermittelt werden, welche Parkzonen frei oder belegt sind. Dies ist in Block 440 dargestellt. In der Datenbank 290 werden beispielsweise die Kfz-Kennzeichen der nicht ausgebuchten Fahrzeuge und der Zeitpunkt des Endes der Parkraumbewirtschaftung hinterlegt.

Sollen die noch eingebuchten Parkraumnutzer mit Ende der Parkraumbewirtschaftungszeit automatisch ausgebucht werden, wird die Abwicklung des Parkvorgangs im Block 450 fortgesetzt. Sollen hingegen die noch eingebuchten Parkraumnutzer am nächsten Tag mit Beginn der Parkraumbewirtschaftung wieder automatisch eingebucht werden, so wird in Block 440 der Zeitstempel, der das Ende der täglichen Parkraumbewirtschaftung anzeigt und das Kfz-Kennzeichen des Fahrzeugs des nicht ausgebuchten Parkraumnutzers in der Datenbank 290 hinterlegt. Zu Beginn der nächsten Parkraumbewirtschaftung kann das Rechenzentrum 80 hinsichtlich der noch eingebuchten Parkraumnutzer die Parkraumüberwachung in Funktionsblock 180 und Entscheidungsblock 210 wieder aufnehmen. Angemerkt sei noch, dass die Mitarbeiter einer kommunalen Parkraumüberwachung auf die Datenbank 190 und/oder 290 zugreifen können, um zu prüfen, ob ein Fahrzeug eingebucht ist.

## Patentansprüche

1. Verfahren zum Abwickeln eines Parkvorgangs unter Verwendung eines mit einem öffentlichen Mobilfunknetz (40) verbundenen Mobilfunkgeräts (30) mit folgenden Verfahrensschritten:
a) Ermitteln von ortsbezogenen Daten, die den Standort bestimmen, an dem sich das Mobilfunkgerät (30) aktuell befindet;
b) Übertragen der ortsbezogenen Daten sowie eine individuelle Kennung, die in dem Mobilfunkgerät (30) gespeichert ist, zu einer zentralen Verwaltungs- und Überwachungseinrichtung (80);
c) Umsetzen der ortsbezogenen Daten in eine vordefinierte Parkzone (20);
d) unter Ansprechen auf die individuelle Kennung Prüfen, ob der Benutzer des Mobilfunkgeräts (30) berechtigt ist, ein Fahrzeug innerhalb der Parkzone (20) zu parken; **gekennzeichnet durch**:
e) Ermitteln von Informationen darüber, wie viele Parkplätze in der Parkzone (20) belegt oder noch frei sind mittels Abfragen einer Datenbank (190), wobei aus den in der Datenbank gespeicherten Kfz-Kennzeichen und/oder Handy-Nummern die Fahrzeuge ermittelt werden, die nach dem Ende der Parkraumbewirtschaftung noch nicht ausgebucht wurden; sowie aus den zusätzlich gespeicherten GSM- Koordinaten oder Mobilfunk-Netzzellen-Kennungen ermittelt wird, welche Parkzonen frei oder belegt sind; sowie indem eine Parkzone in mehrere Parkplätze unterteilt ist, die Datenbank die Informationen darüber enthält, wie viele Parkplätze belegt oder noch frei sind; und
f) Prüfen, ob innerhalb der Parkzone (20) ein freier Parkplatz verfügbar ist, wenn der Benutzer des Mobilfunkgeräts (30) berechtigt ist, ein Fahrzeug innerhalb der Parkzonen (20) zu parken.

2. Verfahren nach Anspruch 1, **dadurch gekennzeichnet, dass** die ermittelten ortsbezogenen Daten GSM-Koordinaten oder eine Mobilfunk-Netzzellen-Kennung darstellen, die vom Mobilfunkgerät oder vom Mobilfunknetz ermittelt werden, und dass
die individuelle Kennung die Rufnummer des Mobilfunkgeräts ist.

3. Verfahren nach Anspruch 1 oder 2, **dadurch gekennzeichnet, dass**
in Schritt b) das Kfz-Kennzeichen des Benutzer-Fahrzeugs, die individuelle Kennung, die ortsbezogenen Daten und gegebenenfalls ein Hinweis auf einen Parkwunsch des Benutzers in einer SMS-Mitteilung über ein dem Mobilfunknetz zugeordnetes SMS-Gateway zur zentralen Verwaltungs- und Überwachungseinrichtung übertragen werden.

4. Verfahren nach Anspruch 3, **dadurch gekennzeichnet, dass** das Kfz-Kennzeichen und die Rufnummer des SMS-Gateways im Mobilfunkgerät gespeichert werden und das die SMS-Mitteilung durch eine einzige Tastenbetätigung am Mobilfunkgerät erzeugt und abgesendet wird.

5. Verfahren nach Anspruch 3 oder 4, **dadurch gekennzeichnet, dass**
die zentrale Verwaltungs- und Überwachungseinrichtung unter Ansprechen auf den Empfang der SMS-Mitteilung einen Zeitstempel, der den Parkbeginn anzeigt, erzeugt, und dass das Kfz-Kennzeichen, der Parkbeginn und die Parkzone in einer Datenbank gespeichert werden.

6. Verfahren nach Anspruch 5, **dadurch gekennzeichnet, dass** zum Beenden des Parkvorgangs ein Hinweis auf das Parkende und die individuelle Kennung vom Mobilfunkgerät zur zentralen Verwaltungs- und Überwachungseinrichtung übertragen werden, und dass
in der zentralen Verwaltungs- und Überwachungseinrichtung ein Zeitstempel, der das Parkende anzeigt, erzeugt und unter Ansprechen auf den Parkbeginn und das Parkende die Parkdauer berechnet wird.

7. Verfahren nach Anspruch 6, **dadurch gekennzeichnet, dass** unter Ansprechen auf die Parkdauer und die Parkzone die zu bezahlende Parkgebühr berechnet wird.

8. Verfahren nach einem der Ansprüche 4 bis 7, **dadurch gekennzeichnet, dass**
in Abhängigkeit des Kontostand eines Pre-paid-Kontos des Benutzers, des Parkbeginns und der Parkzone eine Meldung über die maximale Parkdauer zum Mobilfunkgerät übertragen wird.

9. Verfahren nach Anspruch 8, **dadurch gekennzeichnet, dass** das Benutzerkonto automatisch in Höhe der Parkgebühr belastet wird.

10. Verfahren nach einem der Ansprüche 6 bis 9, **dadurch gekennzeichnet, dass**
zum Ausbuchen des parkenden Fahrzeugs das dazugehörende Kfz-Kennzeichen aus der Datenbank gelöscht wird.

## Claims

1. A method for performing a parking procedure using a mobile telecommunication device (30) that is connected to a public mobile telecommunication network (40), comprising the method steps of:
a) determining location-related data which define the location at which the mobile telecommunication device (30) is currently located;
b) transmitting the location-related data and an individual identifier stored in the mobile telecommunication device (30) to a central management and monitoring device (80);
c) converting the location-related data into a predefined parking zone (20);
d) in response to the individual identifier, checking whether the user of the mobile telecommunication device (30) is authorized to park a vehicle within said parking zone (20);
**characterized by**
e) determining information about how many parking spaces in said parking zone (20) are occupied or still free, by querying a database (190), by determining, from the vehicle registration numbers and/or mobile phone numbers stored in the database, those vehicles which have not yet been booked out after the end of the parking space management; and by determining, from the additionally stored GSM coordinates or mobile telecommunication network cell identifiers, which parking zones are free or occupied; and, as a parking zone is divided into a plurality of parking spaces, the database contains information about how many parking spaces are occupied or still free; and
f) verifying whether a free parking space is available within said parking zone (20), if the user of the mobile telecommunication device (30) is authorized to park a vehicle within said parking zone (20).

2. The method according to claim 1, **characterized in that** the determined location-related data are GSM coordinates or a mobile telecommunication network cell identifier which are determined by the mobile telecommunication device or by the mobile telecommunication network; and that the individual identifier is the phone number of the mobile telecommunication device.

3. The method according to claim 1 or 2, **characterized in that** in step b), the vehicle registration number of the user's vehicle, the individual identifier, the location-related data, and optionally a notice relating to a parking space desired by the user are transmitted in an SMS message to the central management and monitoring device via an SMS gateway associated with the mobile telecommunication network.

4. The method according to claim 3, **characterized in that** the vehicle registration number and the phone number of the SMS gateway are stored in the mobile telecommunication device; and that the SMS message is generated and transmitted by a single key actuation on the mobile telecommunication device.

5. The method according to claim 3 or 4, **characterized in that** in response to the receipt of the SMS message, the central management and monitoring device generates a time stamp which indicates the start of parking; and that the vehicle registration number, the start of parking, and the parking zone are stored in a database.

6. The method according to claim 5, **characterized in that**, for terminating the parking procedure, a notice relating to the end of parking and the individual identifier are transmitted from the mobile telecommunication device to the central management and monitoring device; and that in the central management and monitoring device, a time stamp indicating the end of parking is generated, and in response to the start of parking and the end of parking, the parking duration is calculated.

7. The method according to claim 6, **characterized in that** in response to the parking duration and the parking zone, the parking fee to be paid is calculated.

8. The method according to any one of claims 4 to 7, **characterized in that** in dependence of the account status of a prepaid account of the user, the start of parking and the parking zone, a message about the maximum parking time is transmitted to the mobile telecommunication device.

9. The method according to claim 8, **characterized in that** the user account is automatically debited by the amount of the parking fee.

10. The method according to any one of claims 6 to 9, **characterized in that** for booking out the parking vehicle, the associated vehicle registration number is deleted from the database.

## Revendications

1. Procédé destiné à orchestrer une opération de stationnement en utilisant un appareil radio mobile (30) relié à un réseau radio public (40) avec les étapes de procédé suivantes :
a) la détermination de données relatives à un lieu, qui définissent l'emplacement où se trouve actuellement l'appareil radio mobile (30) ;
b) la transmission des données relatives à un lieu ainsi qu'une identification individuelle qui est stockée dans l'appareil radio mobile (30) vers un dispositif central de gestion et de contrôle (80) ;
c) la conversion des données relatives à un lieu en une zone de stationnement (20) prédéfinie ;
d) en réaction à l'identification individuelle, le fait de vérifier si l'utilisateur de l'appareil radio mobile (30) est autorisé à stationner un véhicule à l'intérieur de la zone de stationnement (20) ;
**caractérisé par** :
e) la détermination d'informations indiquant combien de places de stationnement dans la zone de stationnement (20) sont occupées ou encore libres en interrogeant une banque de données (190), où, à partir des numéros d'immatriculation de véhicule et/ou des numéros de téléphone portable stockés dans la banque de données sont déterminés les véhicules qui, à l'issue de l'exploitation de l'espace de stationnement, n'ont pas encore été décomptabilisés ; de même qu'à partir des coordonnées GSM ou des identifications de cellules de réseau de radio mobile stockées en supplément est déterminé quelles zones de stationnement sont libres ou occupées ; de même que dans la mesure où une zone de stationnement est divisée en plusieurs places de stationnement, la banque de données comporte les informations indiquant combien de places de stationnement sont occupées ou encore libres ; et
f) le fait de vérifier si une place de stationnement libre est disponible à l'intérieur de la zone de stationnement (20) lorsque l'utilisateur de l'appareil radio mobile (30) est autorisé à stationner un véhicule à l'intérieur de la zone de stationnement (20).

2. Procédé selon la revendication 1, **caractérisé en ce que** les données relatives à un lieu déterminées représentent des coordonnées GSM ou une identification de cellule de réseau de radio mobile qui sont déterminées par l'appareil radio mobile ou par le réseau radio mobile, et **en ce que** l'identification individuelle est le numéro d'appel de l'appareil radio mobile.

3. Procédé selon la revendication 1 ou 2, **caractérisé en ce que**, dans l'étape b), le numéro d'immatriculation de véhicule du véhicule-utilisateur, l'identification individuelle, les données relatives à un lieu et le cas échéant un avis concernant un souhait de stationnement de l'utilisateur sont transmis dans un message SMS via une passerelle SMS attribuée au réseau radio mobile vers le dispositif central de gestion et de contrôle.

4. Procédé selon la revendication 3, **caractérisé en ce que** le numéro d'immatriculation de véhicule et le numéro d'appel de la passerelle SMS sont stockés dans l'appareil radio mobile et **en ce que** le message SMS est produit et envoyé à l'appareil radio mobile via un unique actionnement de touche.

5. Procédé selon la revendication 3 ou 4, **caractérisé en ce que** le dispositif central de gestion et de contrôle, en réaction à la réception du message SMS, produit un horodatage qui indique le début du stationnement, et **en ce que** le numéro d'immatriculation de véhicule, le début du stationnement et la zone de stationnement sont stockés dans une banque de données.

6. Procédé selon la revendication 5, **caractérisé en ce que**, pour terminer l'opération de stationnement, un avis concernant la fin du stationnement et l'identification individuelle de l'appareil radio mobile sont transmis vers le dispositif central de gestion et de contrôle, et **en ce que**, dans le dispositif central de gestion et de contrôle, un horodatage qui indique la fin du stationnement est produit et la durée de stationnement est calculée en réaction au début du stationnement et à la fin du stationnement.

7. Procédé selon la revendication 6, **caractérisé en ce que** les frais de stationnement à régler sont calculés en réaction à la durée de stationnement et à la zone de stationnement.

8. Procédé selon l'une quelconque des revendications 4 à 7, **caractérisé en ce qu'**en fonction du solde d'un compte prépayé de l'utilisateur, du début du stationnement et de la zone de stationnement, une annonce concernant la durée de stationnement maximale est transmise vers l'appareil radio mobile.

9. Procédé selon la revendication 8, **caractérisé en ce que** le compte de l'utilisateur est automatiquement débité à hauteur des frais de stationnement.

10. Procédé selon l'une quelconque des revendications 6 à 9, **caractérisé en ce que**, pour décomptabiliser le véhicule en stationnement, le numéro d'immatriculation de véhicule afférent est supprimé de la banque de données.
